# EUROPEAN PATENT SPECIFICATION

(11) **EP 2 883 679 B1**
(45) Date of publication and mention of the grant of the patent: **11.03.2020**
(21) Application number: 14195043.6
(22) Date of filing: 27.11.2014
(51) Int. Cl.: B29C 48/25, B29C 48/30, B29C 48/49, B29C 48/265, B29C 48/07, B29D 30/52

(54) **Process and device for locking an extrusion head**
Verfahren und Vorrichtung zur Verriegelung eines Extrusionskopfs
Procédé et dispositif pour bloquer une tête d'extrusion

(30) Priority: 13.12.2013 SK 501442013 U
(43) Date of publication of application: 17.06.2015
(73) Proprietor: Konstrukta Industry, a.s, 912 50 Trencin (SK)
(72) Inventor: Adaska, Peter, 91305 Melcice (SK)
(74) Representative: Andera, Jiri

(56) References cited:
- EP-A1- 2 316 634
- DE-A1- 3 729 447
- DE-A1-102011 084 110
- KR-B1- 101 042 925
- US-A1- 2006 018 987

## Description

### BACKGROUND OF THE INVENTION

### Field of the Invention

The invention relates to a locking process for an extrusion head, particularly for multi-sectional extrusion heads representing the end part of extruders being intended for the production of extruded profiles in rubber and plastics industry.

Extruder heads being intended for the continual production of one or more extruded profiles from one or more extruders, consists of at least one moveable part placed on the clamping pivots which enable the relative motion so that they mutually abut the sealing surface in working position and it is possible to swingingly rotate them to an opening position which enables entrance for cleaning and servicing.

### Description of the Related Art

The usual production devices for extruded profiles consist of at least one extruder being attached to extrusion head. These devices process input material by shuffling and heating in order to generate a pressure in the plasticized material. Consequently, material is extruded through sockets in extrusion head to the required shape of extruded profile intended by the shape of output section on extrusion head. Extrusion heads are designed as sectional and openable in particular because of cleaning and service, while in working position they must make a seal and resist the pressure of plasticized material.

The usual process of generation the closing force to sectional portions of extrusion head in working position in order to prevent from escape of plasticized material moving through sockets of extrusion head under high pressure, is realized by straight force from hydraulic units.

The other solutions are known as hammer heads. In this solution, two parallel pull elements are allocated to each portion of head. In working position these elements are moved into hollows in opposite portion of head by shaped protrusions so they can transmit the closing force by tension. Dimensions of closing hydraulic units are usually considerably large, needed pressures in hydraulic system are usually high and the solution is significantly capital intensive.

The solution according to application DE2201631C3 known as clamping heads is based on closing force generated by C-shaped parts which are controlled usually by hydraulic units. These units generate closing force through wedge slant to openable portions of extrusion head. This process of closing force generation is useful in term of the control forces multiplication. Disadvantage of multiple extruders consists in impossibility of separately opening only one portion of extrusion head for cleaning and service. It influences the extension of device downtime significantly. Also a couple of robust clapper moveable C-shaped parts demands the large assembling and manipulating area.

Moreover, it is known a solution of the generation of closing force through wedge slant of elementary pushing bars being led in solid walls. Apart from assembling area of robust hydraulic units, deformation stability of walls under load in working position is usually problematic in regard to necessary large arm of retained closing forces.

In these manners of arrangement, not only significant investment costs necessary to fulfill required technical parameters are originated, but also operation costs are increased because of their disadvantageous characteristics.

Another solution of operating a locking mechanism of extrusion head is described in DE 10 21 084110 A1 and KR 101 042 925 B1 where two wedges (fig. 10, cf. 50, 60) with slants (fig. 10, cf. 51, 61) are used for locking of the head in working position. These two wedges create one wedge mechanism and force generated by the drive (fig. 10, cf. 59) is converted to the perpendicular direction to the bar (fig. 10, cf. 30).

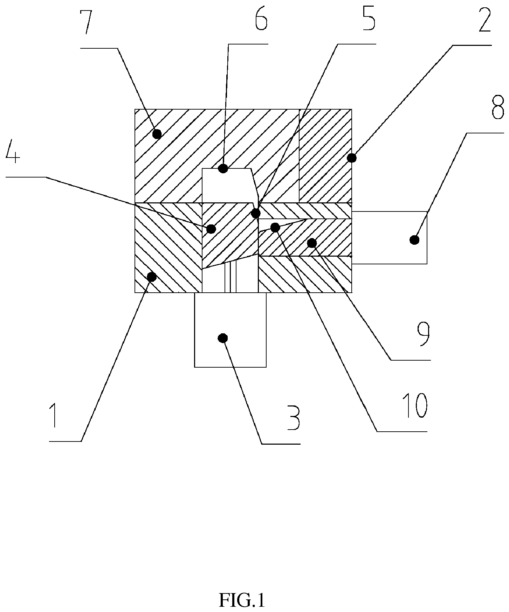

Another solution of operating a locking mechanism of extrusion head is described in EP 2 316 634 A1 where on the each side of extrusion head is one Y-shaped side wall (fig.1, cf. 1). The movable upper and lower portion (fig.3, cf. 7) of the extrusion head is fixed by three parallel pushing bars (fig.3, cf. 3,9) on the each side of the extrusion head and locking forces are held by Y-shaped side walls(fig.1, cf. 1).

Another solution of operating a locking mechanism of extrusion head is described in US 2006/018987 A1. This document describes locking of the extrusion head by the main locking cylinders (fig.5, cf. 12) without any slant on fastening rod. Stopper-operating cylinders (fig.5, cf. 10) are used for creating of holding surface by which are held the rods of main locking cylinders.

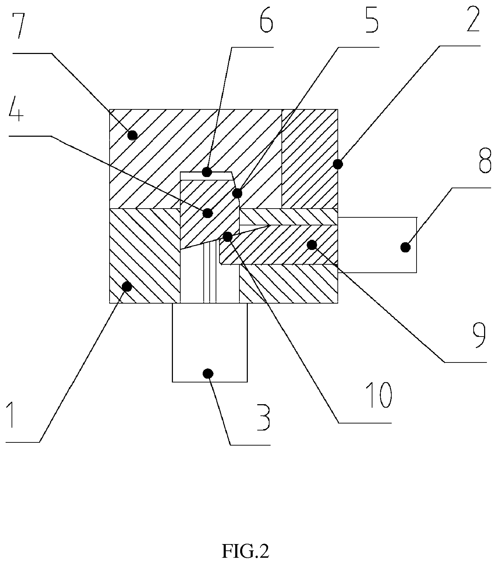

Another solution of operating a locking mechanism of extrusion head is described in DE 37 29 447 A1, where extrusion head is divided vertically for stable (immovable) portion (fig.2, cf. 2) and turning (movable) portion (fig.2, cf. 16), which is movable around axe (fig.2, cf. 15). These portions are locked in four locking points by parallel wedge mechanisms consisting of one cylinder and one wedge slant (fig.4, cf. 23, 24, 25).

### SUMMARY OF THE INVENTION

The object of invention is to create the process of locking mechanism for extrusion head where it is possible to fix particular portions of head in working position simply. Another object of present invention is to provide a locking mechanism for an extrusion head which makes it possible to simply fix particular portions of an extrusion head in a working position.

This problem is solved by a process of operating a locking mechanism for multi-sectional extrusion heads according to claim 1, and by a related device for generating a closing force in such multi-sectional extrusion heads according to claim 2. A preferred embodiment of the device is also claimed in a dependent claim.

The presented invention is based on the idea to use multiple transmission of wedge mechanism for the locking of extruder head. According to invention, locking mechanism for extrusion head consists of two moving units with wedge mechanism for each side of extrusion head which are placed on wall on carrier portion of extrusion head, while the one side moving unit always moves the pushing bar with two wedge slants to the locking hole in openable portion of extrusion head to fix its working position. Consequently, by the second wedge slant being moved to wedge hole in moved pushing bar and by the distribution of forces on the second wedge slant, the second moving unit generates the closing force for the resisting of plasticised material pressure to achieve the effect of locking the mechanism.

The advantages of presented invention are low control forces necessary to the generation of closing force and the locking effect of extrusion head in working position what consequently causes significantly decreasing of demands on the dimensions of moving unit.

In addition, invention is advantageous in term of the mechanical locking by a couple of wedge mechanisms what causes backup of safety against the loss of tightness of extrusion head in case of loss of moving force in moving unit.

It is advantageous to arrange the system of generating of closing force such that it is possible to use identical sub-assembly of wall with a couple of moving units even for different widths for multiple extrusion heads what causes the increasing repeatability of using parts on device.

In spite of higher number of moving units, the presented invention makes locking mechanism of this type so that in comparison with usual devices when achieving required result to reduce investments costs and increase the operation reliability.

### BRIEF DESCRIPTION OF THE DRAWINGS

FIG.1 shows device in working position of a multi-sectional extrusion head.
FIG.2 shows device in opening position.

### DETAILED DESCRIPTION OF THE INVENTION

Device for generation of closing force on sectional extrusion heads representing the end part of extruders being intended for production of extruded profiles consists of two moving units with wedge mechanism for each side of extrusion head which are placed on wall (1) on carrier portion of extrusion head (2), while the each side moving unit (3) always includes the pushing bar (4) with wedge slant (5) overlapping to the locking hole (6) in openable portion of extrusion head (7) to in working position and the second moving unit (8) consists of pushing bar (9) with the wedge slant (10) overlapping to pushing bar (4) in working position.

The operation of upper described device is following: openable portion of sectional extrusion head (7) is rotated to working position by not illustrated drive. Consequently, pushing bar (4) with wedge slant (5) is moved by moving unit (7) to locking hole (6) in openable portion of extrusion head (7) and after the reaching the end position, pushing bar (9) with wedge slant (10) is moved to pushing bar (4) in working position by the second moving unit (8). Additional closing force generated by moving unit (8) through wedge slant (10) is added to closing force generated by moving unit (3). When it is required the rotation of extrusion head to opening position, device operation is carried out in the opposite order of described movements.

As a result, it means that openable portion of extrusion head (7) is in this case mechanically locked by a couple of wedge mechanisms and by this effect the safety against the loss of tightness of extrusion head is backup also in case of loss of moving force in moving unit. By the arrangement of presented invention in comparison with usual solutions, the demands on dimensions of moving units as well as nominal moving forces of moving units are decreased and at the same time the assembling area is lower with advantage of abolishment of requirement for necessary manipulating area used for the opening of locking mechanism of sectional extrusion heads. The presented invention causes the decrease of investment difficulty-costs in term of smaller dimensions of device and also the decrease of operational demands on the operation and energy consumption.

### The Industrial Applicability

The process of closing force generation for multi-sectional extrusion heads and associated device is usable primarily in the in production of rubber belt semi-finished products for the production of automobile tires and extruded profiles in plastics industry. Moreover, it is possible to use this mechanism for the design of multiple extrusion heads. The realization of the described process of closing force generation is independent on angular position of extruders in assemblies with multiple extruders.

## Claims

1. Process of operating a locking mechanism for multi-sectional extrusion heads representing the end part of extruders intended for production of extruded profiles wherein for the generation of a closing force ensuring the locking of an extrusion head (7), a first wedge slant (5) of a first pushing bar (4) is pushed by a first moving unit (3) into a locking hole in an openable portion of an extrusion head (7) for fixing said openable portion of the extrusion head (7) in a working position **characterised in that** consequently for generating the main locking force, a second wedge slant (10) of a second pushing bar (9) is moved to overlap with the first pushing bar (4) by a second moving unit (8).

2. Device for generating a closing force in multi-sectional extrusion heads in a process according to claim 1 comprising at least one locking mechanism on both sides of an extrusion head (7) **characterised in that** said at least one locking mechanism consist of a first moving unit (3), a first pushing bar (4) with a first wedge slant (5), a second moving unit (8) and a second pushing bar (9) with a second wedge slant (10), wherein the first moving unit (3) is configured for moving the first pushing bar (4) with the first wedge slant (5) into a locking hole in an openable portion of the extrusion head (7) and the second moving unit (8) is configured for moving a second pushing bar (9) with a second wedge slant (10) to overlap with the first pushing bar (4) in a working position of said extrusion head (7).

3. Device according to claim 2 **characterized in that** the moving units (3, 8) are hydraulic units.

## Patentansprüche

1. Verfahren für betreiben einer Sperrvorrichtung für mehrteilige Extruderköpfe, die das Endteil der Extruder, die für die Herstellung von Strangpressprofilen vorgesehen sind, darstellt, wobei für Generierung einer Schließkraft, die das Sperren eines Extruderkopfes (7) gewährleistet, eine erste Keilschräge (5) eines ersten Schiebebügels (4) von einer ersten Bewegungseinheit (3) in ein Verriegelungsloch in einem öffenbaren Teil des Extruderkopfes (7) geschoben wird, um den genannten öffenbaren Teil des Extruderkopfes (7) in einer Arbeitsposition zu fixieren, **dadurch gekennzeichnet, dass**, folglich für die Generierung der Hauptschließkraft eine zweite Keilschräge (10) eines zweiten Schiebebügels (9) bewegt wird, um sich mit dem ersten Schiebebügel (4) von einer zweiten Bewegeinheit (8) zu überlappen.

2. Vorrichtung für Generierung einer Schließkraft bei mehrteiligen Extruderköpfen bei einem Verfahren gemäß Anspruch 1, die mindestens eine Sperrvorrichtung auf beiden Seitens eines Extruderkopfes (7) umfasst, **dadurch gekennzeichnet, dass** die mindestens eine Sperrvorrichtung aus einer ersten Bewegungseinheit (3), einem ersten Schiebebügel (4) mit einer ersten Keilschräge (5), einer zweiten Bewegungseinheit (8) und einem zweiten Schiebebügel (9) mit einer zweiten Keilschräge (10) besteht, wobei die erste Bewegungseinheit (3) dafür konzipiert ist, den ersten Schiebebügel (4) mit der ersten Keilschräge (5) in ein Verriegelungsloch in einen öffenbaren Teil des Extruderkopfes (7) zu schieben und die zweite Bewegungseinheit (8) dafür konzipiert ist, den zweiten Schiebebügel (9) mit einer zweiten Keilschräge (10) zu bewegen, um sich mit dem ersten Schiebebügel (4) in einer Arbeitsposition des benannten Extruderkopfes (7) zu überlappen.

3. Vorrichtung gemäß Anspruch 2, **dadurch gekennzeichnet, dass** es sich bei den Bewegungseinheiten (3, 8) um Hydraulikeinheiten handelt.

## Revendications

1. Procédé de fonctionnement d'un mécanisme de verrouillage pour des têtes d'extrusion à sections multiples, représentant l'extrémité des extrudeuses destinées à la production de profilés extrudés dans lequel, aux fins de génèse d'une force de fermeture assurant le verrouillage de la tête d'extrusion (7), une première cale oblique (5) d'une première barre de poussée (4) est poussée par une première unité mobile (3) dans un orifice de verrouillage situé dans une zone ouvrable de la tête d'extrusion (7) aux fins de fixation de ladite zone ouvrable de la tête d'extrusion (7) en position de travail, **caractérisé par** conséquent en ce que, aux fins de génèse de la force principale de fermeture, une seconde cale oblique (10) d'une seconde barre de poussée (9) est déplacée pour chevaucher la première barre de poussée (4) par une seconde unité mobile (8).

2. Dispositif de génèse de la force de fermeture dans des têtes d'extrusion à sections multiples dans le processus conformément à la revendication 1 comprenant au minimum un mécanisme de verrouillage des deux côtés de la tête d'extrusion (7), **caractérisé en ce que** le mécanisme de verrouillage comprend au minimum une première unité mobile (3), une première barre de poussée (4) avec une première cale oblique (5), une seconde unité mobile (8) et une seconde barre de poussée (9) avec une seconde cale oblique (10), dans lequel la première unité mobile (3) est configurée pour déplacer la première barre de poussée (4) avec la première cale oblique (5) dans l'orifice de verrouillage situé dans la zone ouvrable de la tête d'extrusion (7) et la seconde unité mobile (8) est configurée pour déplacer la seconde barre de poussée (9) avec la seconde cale oblique (10) pour chevaucher la première barre de poussée (4) en position de travail de ladite tête d'extrusion (7).

3. Dispositif conformément à la revendication 2 **caractérisé en ce que** les unités mobiles (3, 8) sont des unités hydrauliques.
